# EUROPÄISCHE PATENTANMELDUNG

(11) **EP 1 595 730 A2**
(43) Veröffentlichungstag der Anmeldung: **16.11.2005**
(21) Anmeldenummer: 05009921.7
(22) Anmeldetag: 06.05.2005
(51) Int. Cl.: B60J 7/20

(54) **Cabriolet-Fahrzeug**

(30) Priorität: 15.05.2004 DE 102004024227
(71) Anmelder: Wilhelm Karmann GmbH, 49084 Osnabrück (DE)
(72) Erfinder: Böhnke, Achim, 49545 Tecklenburg (DE); Hahn, Stefan, 49143 Bissendorf (DE); Selle, Heinrich, 32549 Bad Oeynhausen (DE)

(57) **Zusammenfassung**

Ein Cabriolet-Fahrzeug (1) mit einem im hinteren Fahrzeugbereich in der Karosserie (7) unterhalb einer Durchtrittsebene (6) ablegbaren Dach (2), wobei ein Teil der Durchtrittsebene (6) bei geöffnetem Dach (2) von einer durch zumindest einen Antrieb (12) beweglichen, bei geschlossenem Dach (2) in Fahrtrichtung (F) vor dem hinteren Dachende und im Nahbereich hinter dem Insassenraum (9) gelegenen Verkleidung (10) abdeckbar ist, wird so ausgebildet, daß die Verkleidung (10) mitsamt ihrem oder ihren Antrieb(en) (12) und einer vermittelnden Bewegungsmechanik (13) als modulare Einheit (11) ausgebildet und vormontiert in einen Karosserierohbau einsetzbar ist (Fig. 2).

## Beschreibung

Die Erfindung betrifft ein Cabriolet-Fahrzeug mit zumindest einer Verkleidung für einen Teil einer Durchtrittsebene des Daches durch die Karosserie nach dem Oberbegriff des Anspruchs 1 sowie eine zugehörige Verkleidung.

Es sind zahlreiche Cabriolet-Fahrzeuge bekannt, bei denen das Dach im hinteren Fahrzeugbereich unterhalb von Verkleidungsteilen, die die Durchtrittsebene des Daches durch die Oberseite der Karosserie optisch verschließen, ablegbar ist.

Die EP 0860 313 A1 zeigt ein Cabriolet-Fahrzeug, bei dem eine an den Insassenraum rückwärtig anschließende und häufig auch als Hutablage bezeichnete Verkleidung um eine horizontale Querachse schwenkbar ist. Hierfür sind an der Karosserie Ausleger angeordnet, an denen die Verkleidung mechanisch gehalten ist und um die herum sie schwenkbar ist. Ein Antrieb und ein die Antriebskraft vermittelndes Gestänge oder dergleichen, hier ein Bowdenzug, sind gesondert zu montieren, was den Montageaufwand erhöht. Zudem muß dabei an schwer zugänglichen Stellen des Karosserierohbaus gearbeitet werden, was den Zeitaufwand zusätzlich erhöht.

Der Erfindung liegt das Problem zugrunde, bei einem Cabriolet-Fahrzeug mit einer beweglichen Verkleidung hinter dem Insassenraum eine Montageerleichterung zu erreichen.

Die Erfindung löst dieses Problem durch ein Cabriolet-Fahrzeug mit den Merkmalen des Anspruchs 1 sowie durch eine bewegliche Verkleidung mit den Merkmalen des Anspruchs 13. Hinsichtlich weiterer vorteilhafter Ausgestaltungen der Erfindung wird auf die abhängigen Ansprüche 2 bis 12 verwiesen.

Erfindungsgemäß ist dadurch, daß die Verkleidung mitsamt ihrem oder ihren Antrieb(en) und einer vermittelnden Bewegungsmechanik als modulare Einheit ausgebildet und vormontiert in einen Karosserierohbau einsetzbar ist, der Montageaufwand erheblich verringert. Es muß keine zusätzliche Verbindung zu einem in der Karosserie liegenden Antriebsorgan montiert werden, da dieses bereits an der modularen Einheit vormontiert ist. Auch das Anschließen von weiteren Gestängeteilen, Bowdenzügen oder ähnlichem ist entbehrlich.

Insbesondere ist es vorteilhaft, wenn die modulare Einheit auch als Funktionseinheit vormontierbar und vor ihrem Einbau in den Karosserierohbau die Verkleidung testweise bewegbar ist. Dann können Fehlfunktionen vor dem Einbau erfaßt und behoben werden, ohne daß das eigentliche Produktionsband des Fahrzeugs davon beeinflußt wäre. Dieses kann daher auch bei eventuellen anfänglichen Problemen der Verkleidung mit unverminderter Geschwindigkeit weiterlaufen.

Mit einer Austauschbarkeit der eigentlichen Verkleidung ist einerseits am Fahrzeug ein nachträglicher Wechsel der Verkleidung ermöglicht, zum Beispiel um nachträglich eine mit Leder bezogene Verkleidung zu montieren. Insbesondere kann auch, wenn ein Sortiment von Verkleidungen unterschiedlicher Umrißgestalten zum Einsatz in unterschiedlichen Fahrzeugen über die gleiche Bewegungsmechanik bewegbar ist, die außerhalb der eigentlichen Verkleidung identische modulare Einheit für verschiedene Fahrzeuge eingesetzt werden. Dies stellt eine besonders vorteilhafte Weiterbildung der Erfindung dar, da dann eine erfindungsgemäße modulare Einheit auch mit etwa verschieden breiten Verkleidungen ohne irgendwelche Karosserieanpassungen in immer derselben Weise an verschiedenen Fahrzeugtypen montierbar ist. Anders als im Stand der Technik müssen hierfür keine äußeren Halter in jeweils unterschiedlichen Breitenabständen an der Karosserie montiert werden.

Eine weitere Montagevereinfachung schon des vormontierten Moduls, insbesondere auch für eine Austauschbarkeit der Verkleidung, ergibt sich, wenn diese über ihre gesamte Breite als einstükkiges Plattenteil ausgebildet ist.

Die aufzubringende Antriebskraft ist für eine Leichtbauverkleidung gering. Als Antrieb kann zum Beispiel ein Elektromotor vorgesehen sein, der den Vorteil mit sich bringt, über einen Zentralstecker mit einem von einem Steuergerät des Fahrzeugs verbundenen Anschluß der Karosserie verbindbar zu sein. Die gesamte Montage des Moduls beschränkt sich dann auf die mechanische Festlegung über zum Beispiel vier Schrauben an einer den Insassenraum begrenzenden Rückwand und das Zusammenstecken der elektrischen Verbindung.

Weiterhin ist es günstig, wenn die Verkleidung manuell in eine im wesentlichen vertikale Offenstellung bewegbar ist, weil dann eine Notbetätigung vorgesehen ist, die auch bei Ausfall des motorischen Antriebs jederzeit sicherstellt, daß das Dach geschlossen werden kann.

Weitere Vorteile und Merkmale der Erfindung ergeben sich aus einem in der Zeichnung schematisch dargestellten und nachfolgend beschriebenen Ausführungsbeispiel des Gegenstandes der Erfindung.

In der Zeichnung zeigt:

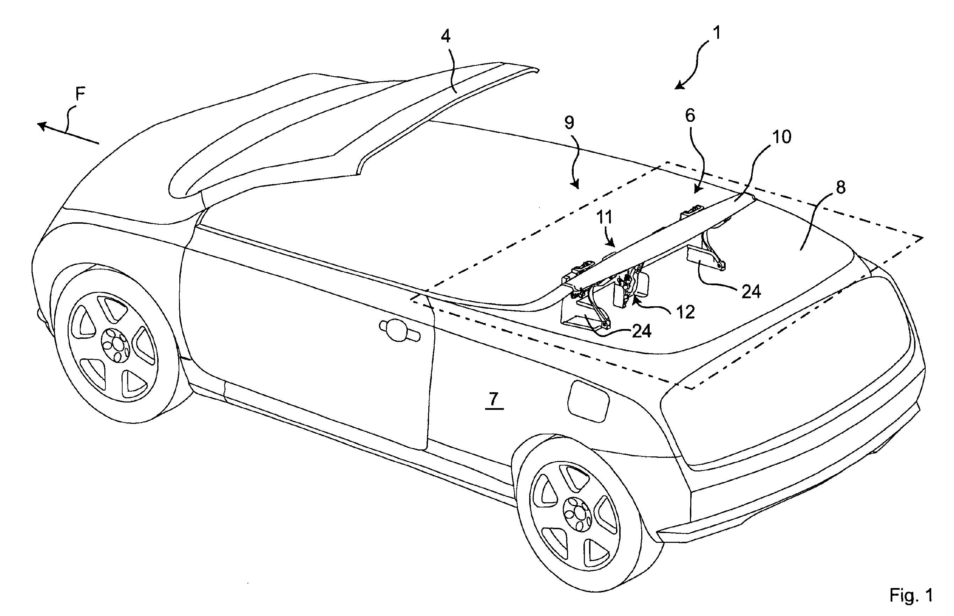

- Fig. 1: einen erfindungsgemäßes CabrioletFahrzeug bei geöffnetem Dach - nicht eingezeichnet - und in im wesentlichen horizontaler Schließstellung liegender Verkleidung,

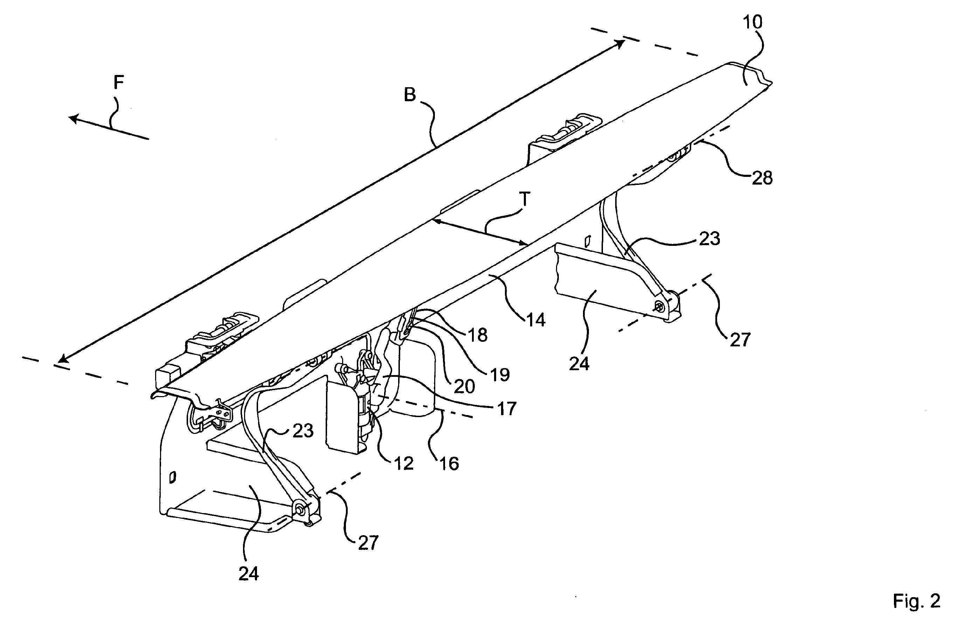

- Fig. 2: eine Einzelteilansicht des die Verkleidung tragenden Moduls im geschlossenen Zustand nach Fig. 1,
- Fig. 3: eine Schnittansicht des Moduls in Stellung nach Fig. 2, wobei der Schnitt parallel zur Fahrzeuglängsrichtung gelegt ist und die Dachspitze des abgelegten Daches zusätzlich eingezeichnet ist,
- Fig. 4 bis Fig. 8: den Bewegungsablauf der Öffnung der Verkleidung in Seitenansicht von der im wesentlichen horizontalen Schließstellung (Fig. 4) bis zur im wesentlichen vertikalen Offenstellung (Fig. 8),
- Fig. 9 bis Fig. 13: den Bewegungsablauf der Öffnung der Verkleidung in Ansicht von hinten von der im wesentlichen horizontalen Schließstellung (Fig. 9) bis zur im wesentlichen vertikalen Offenstellung (Fig. 13),

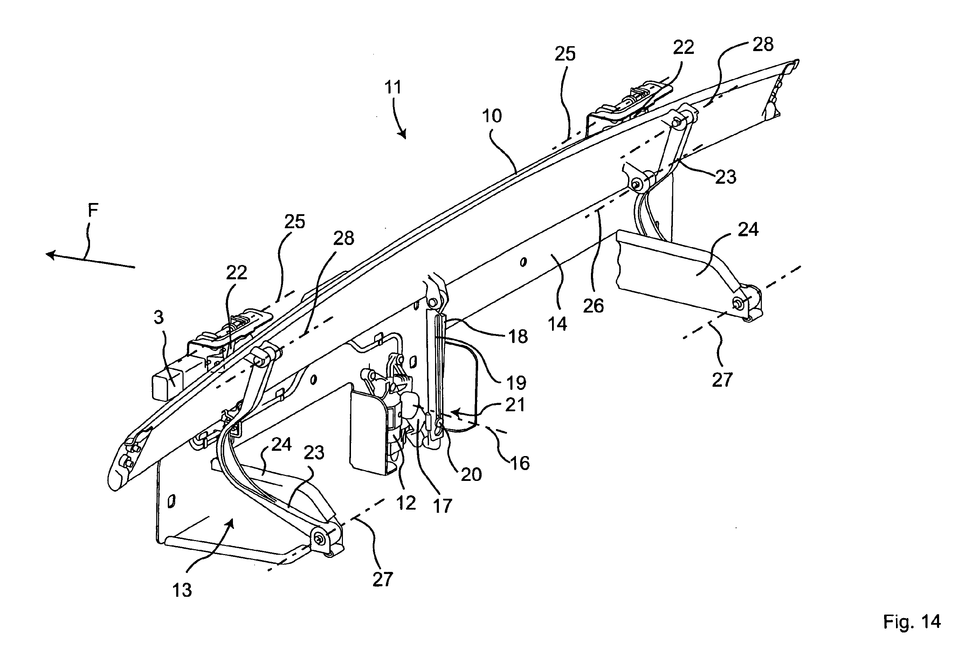

- Fig. 14: das Modul bei in im wesentlichen vertikaler Offenstellung befindlichem Verkleidung aus gleicher Perspektive wie in Fig. 2.

Das erfindungsgemäße Cabriolet-Fahrzeug 1 kann sowohl ein Zweisitzer als auch ein Cabriolet-Fahrzeug mit einem größeren Innenraum und etwa zwei Sitzreihen hintereinander sein.

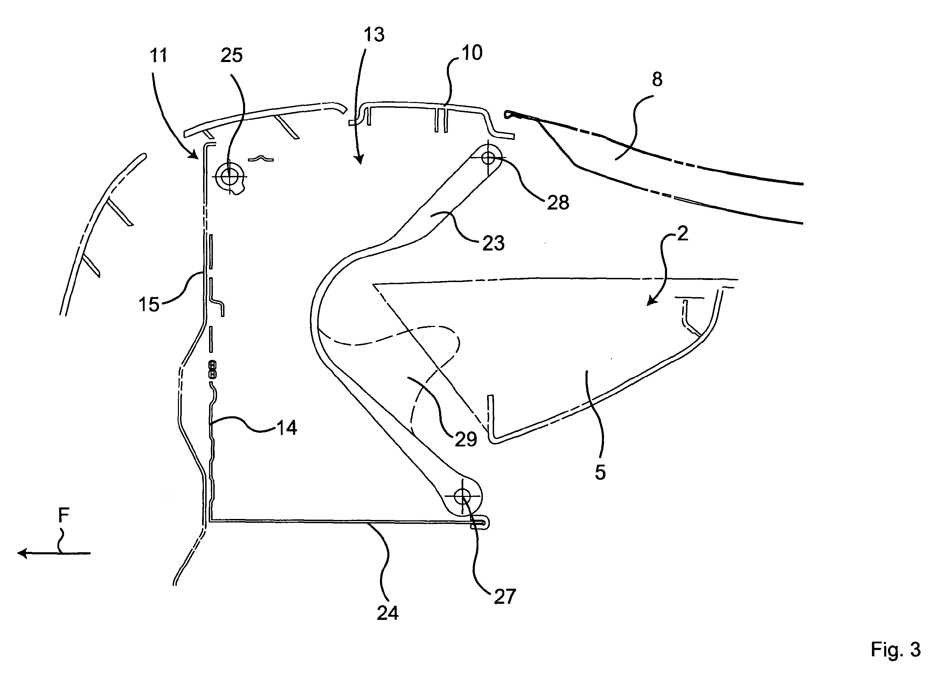

Es umfaßt ein bewegliches Dach 2, von dem in Fig. 3 die im geschlossenen Zustand dem Windschutzscheibenrahmen 4 zugewandte Dachspitze 5 dargestellt ist. Das Dach 2 umfaßt hier mehrere in sich starre Dachteile, was nicht zwingend ist.

In seinem geöffneten Zustand ist es im heckwärtigen Karosseriebereich ablegbar. Am Fahrzeug 1 ist im Ausführungsbeispiel ein großer hinterer Teil der Durchtrittsebene 6 des Daches 2 durch die Oberseite der Karosserie 7 von einem Verdeckkastendeckel 8 und ein kleiner vorderer Teil von einer ein- oder mehrteiligen, bei geschlossenem Dach in Fahrtrichtung vor dem hinteren Dachende und im Nahbereich hinter dem Insassenraum 9 gelegenen Verkleidung 10 abdeckbar.

Die Verkleidung 10 ist hier von einem einstückigen Leichtbauteil, beispielweise aus Kunststoff oder einem metallischen Schaumwerkstoff, ausgebildet Auch eine Mehrteiligkeit in Fahrzeuglängs- und/oder -querrichtung ist grundsätzlich möglich.

Die Verkleidung 10 ist dabei insgesamt Bestandteil eines Moduls 11, das einen oder mehrere Antriebe 12 und eine die Antriebskraft vermittelnde Bewegungsmechanik - insgesamt mit 13 bezeichnet - umfaßt. Es ist als vormontierte Einheit in einen Karosserierohbau einsetzbar.

Das Modul 11 umfaßt eine nahezu vertikal stehende durchbrochene oder durchgehende Vorderwand 14, die über Befestigungsmittel an einer den Insassenraum 9 begrenzenden Rückwand 15 der Karosserie 7 festlegbar ist. Beispielsweise können in äußeren Eckbereichen vier von Schrauben zu durchgreifende Bohrungen vorgesehen sein. Schweißarbeiten zur Befestigung des Moduls 11 sind dann nicht erforderlich. Es kann zudem insbesondere an verschiedenen Fahrzeugtypen montierbar sein, wobei das Modul 11 hierfür mit jeweils anderen Verkleidungen 10 versehen sein kann. Diese können in Anpassung an die Verhältnisse im jeweiligen Fahrzeug eine jeweils unterschiedliche Breite B und/oder Tiefe T aufweisen und zudem abweichend gestaltet sein, etwa mit unterschiedlichen Textilien kaschiert oder unterschiedlich lackiert sein.

Der in der Zeichnung dargestellte Antrieb 12 ist von einem handelüblichen Elektromotor gebildet; auch ein Hydraulik- oder Pneumatikantrieb kommt alternativ in Betracht. Während der Dachbewegung kann der Antrieb 12 unbewegt sein. Dann wird die Verkleidung 10 nach vollständiger Ablage des Daches 2 in der Karosserie 7 geschlossen und vor der ersten Dachbewegung im Schließsinn geöffnet.

Auch dies erleichtert die Übertragbarkeit auf verschiedene Fahrzeuge, da dann unterschiedliche Ablagekinematiken des Daches 2 nicht für unterschiedliche Antriebssteuerungen berücksichtigt werden müssen, sondern der Antrieb 12 kann einfach über einen Endlagenschalter, der die vollständig abgelegte Position des Daches 2 signalisiert, ausgelöst werden. Bei geschlossenem Dach 2 kann die Verkleidung 10 in geöffneter Stellung verbleiben. Dies ist jedoch nicht zwingend.

Der hier gezeigte Elektroantrieb 12 kann über einen einzigen Zentralstecker 3 mit einem von einem Steuergerät angesteuerten Anschluß der Karosserie 7 verbindbar sein. Die Montage des Moduls 11 umfaßt dann nur das mechanische Befestigen der Vorderwand 14 an der Karosseriewand 15 und das Zusammenstecken der elektrischen Verbindung.

Das Modul 11 kann daher nicht nur außerhalb der Karosserie 7 vormontiert, sondern auch auf Funktion getestet werden. Hierzu wird der Stecker 3 an ein externes Steuergerät angeschlossen und die Verkleidung 10 über den Antrieb 12 somit bewegbar. Auch kann ein dem Original entsprechendes Modell eines Karosserieausschnitts vorgesehen sein, so daß bei Bewegung der Verkleidung 10 die korrekte Lage bezüglich der Oberseite der Karosserie 7 vorab prüfbar ist. Die so geprüfte und fertig eingestellte modulare Einheit 11 kann dann an den Rohbau angeliefert und in der oben geschilderten oder einer ähnlichen Weise montiert werden.

Die Verkleidung 10 ist hier zwischen einer im wesentlichen horizontalen Schließstellung bei geöffnetem Dach 2 und einer im wesentlichen vertikalen Offenstellung bei geschlossenem Dach 2 beweglich. Hierfür greift der hier einzige, im Nahbereich der Fahrzeugquermitte liegende Antrieb 12 über einen um eine in Fahrtrichtung F erstreckte Achse 16 schwenkbaren Arm 17 an einem im wesentlichen vertikalen Hebel 18 an, der anderenends am in Fahrtrichtung F vorderen Bereich der Verkleidung 10 angreift.

Der Hebel 18 ist mit einer seiner Erstreckung folgenden und daher im wesentlichen vertikalen Kulisse 19 versehen, in die an seinem unteren Ende 21 eine Kopplung 20 des Antriebsarms 17 eingreift. Im Normalbetrieb ist die Kopplung unverrückbar, so daß die Hebelbewegung direkt in einen Hub des vorderen Bereichs der Verkleidung 10 übersetzt wird. Für den Fall einer Störung kann jedoch durch hinreichenden manuellen Druck auf den vorderen Bereich der Verkleidung 10 der Hebel 18 relativ zu den Kopplungsteilen 20 abwärts verschoben werden, so daß letztgenannte dann in den oberen Bereich der Kulisse 19 verlagert werden. Die Verkleidung 10 wird dann von ihrer im wesentlichen horizontalen Schließstellung in ihre im wesentlichen vertikale Offenstellung verlagert, wodurch in jedem Fall der ansonsten von der Verkleidung 10 abgedeckte Teil des Durchtrittsbereich des Daches 2 geöffnet werden kann und somit ein Schließen des Daches 2 ermöglicht wird. Das manuelle Abwärtsdrücken kann nach Art einer Ratsche bei einer entsprechenden Profilierung der Ränder der Kulisse 19 und/oder der Kopplungsteile 20 irreversibel sein.

Der Hebel 18 ist an dem Arm 17 über ein Kugelgelenk und an der Verkleidung 10 über eine quer zum Fahrzeug 1 liegende Horizontalschwenkachse angekoppelt. Er kann daher seinen Winkel gegenüber der Vertikalen während der Bewegung derart ändern, daß er während der Öffnung der Verkleidung 10 steiler gestellt wird und sich somit an die Vorderwand 14 anlegt, so daß die Vorderkante der Verkleidung 10 hierbei nicht nur nach unten, sondern auch nach vorne bewegt wird.

Innerhalb des Moduls 11 ist die Verkleidung 10 an jeder Fahrzeugquerseite über einen ersten Schwenklenker 22, der sich vom oberen Bereich der Vorderwand 14 zum vorderen Bereich der Verkleidung 10 erstreckt, und über einen bananenförmig eingewölbten Schwenklenker 23, der sich vom hinteren Bereich eines von der Vorderwand 14 entgegen der Fahrtrichtung F weisenden Auslegers 24 zum hinteren Bereich der Verkleidung 10 erstreckt, beweglich.

Die horizontalen Schwenkachsen 25, 26 des ersten Schwenklenkers 22 und die ebenfalls horizontalen Schwenkachsen 27, 28 des eingewölbten Schwenklenkers 23 bilden somit ein Viergelenk aus.

In der Einwölbung des Schwenklenkers 23 ragt bei in Schließstellung liegender Verkleidung und geöffnetem Dach 2 das bei geschlossenem Dach einem Windschutzscheibenrahmen 4 zugewandte vordere Dachende 5. Dieses kann damit sehr platzsparend und weit vorne im Fahrzeug 1 untergebracht werden. Dadurch, daß die Verkleidung 10 erst bei vollständig abgelegtem Dach 2 geschlossen wird, ist eine Kollision mit dem bewegten Dach 2 dabei ausgeschlossen.

Es kann zusätzlich dem Schwenklenker 23 ein Halteteil 29 zugeordnet sein (in Fig. 3 gestrichelt eingezeichnet), das bei geschlossenem Dach 2 in die Dachspitze 5 eingreift und diese dadurch sichert.

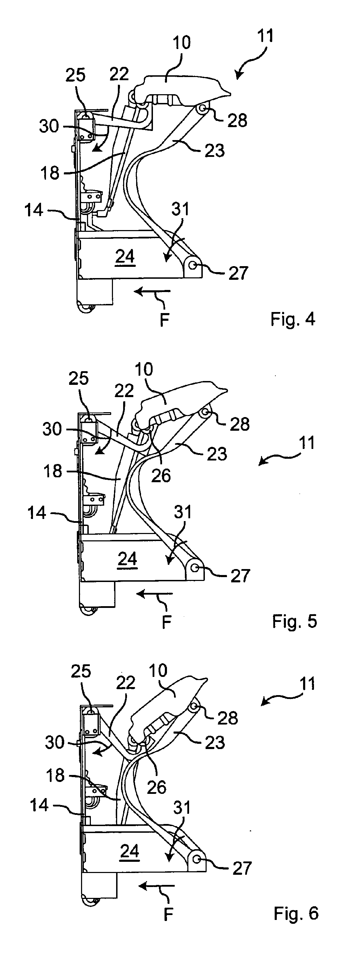

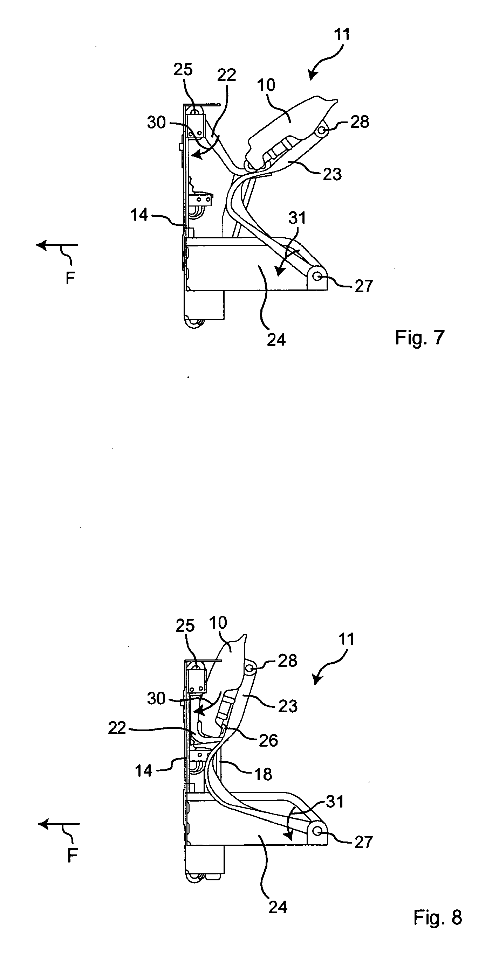

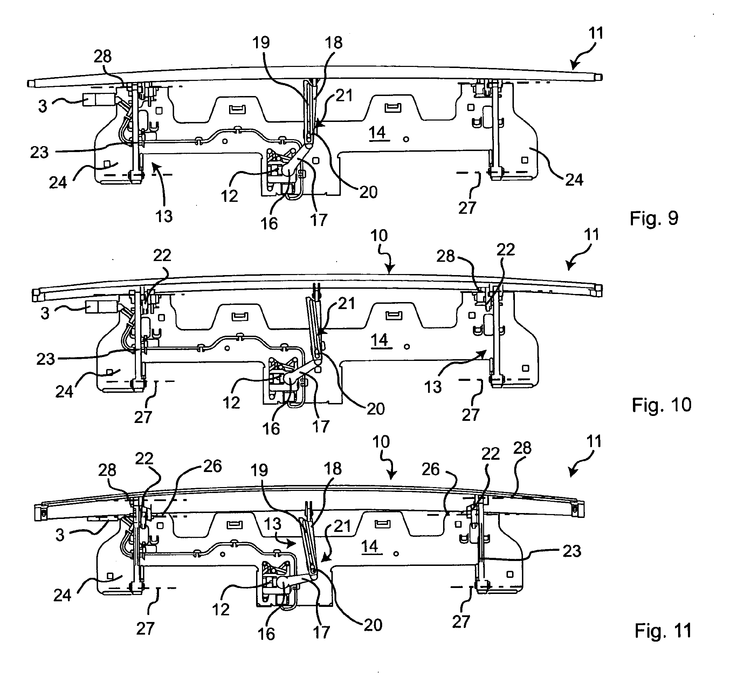

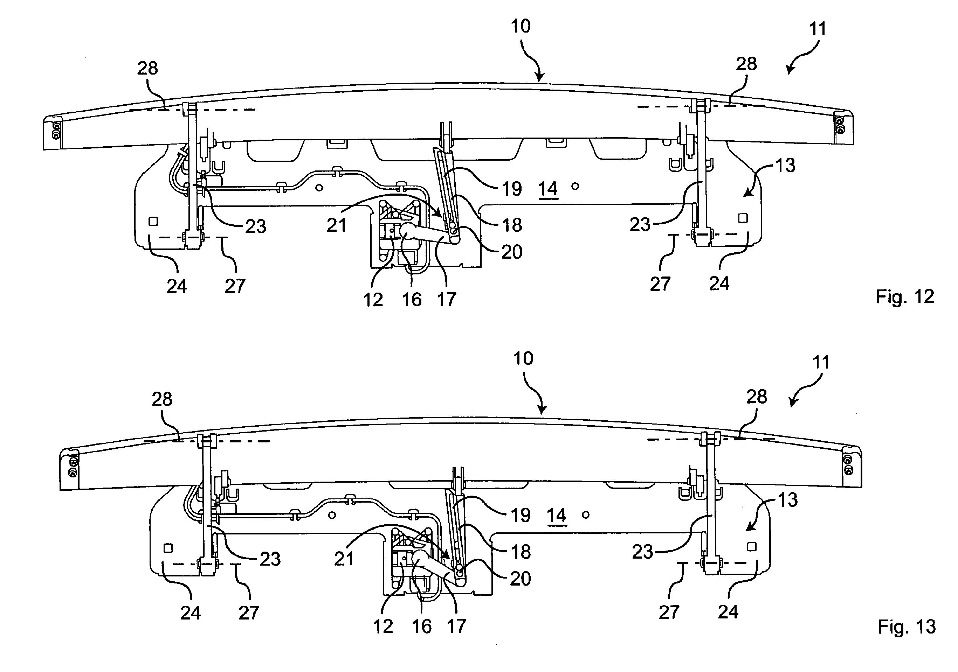

Zur Überführung der Verkleidung 10 aus ihrer geschlossenen in die offene Stellung (Fig. 4 bis Fig. 8 bzw. Fig. 9 bis Fig. 13) schwenkt durch die abwärts gerichtete Kraft auf den Hebel 18 und den vorderen Bereich der Verkleidung 10 der hier selbst nicht angetriebene erste Schwenklenker 22 um seine der Vorderwand 14 zugewandte Achse 25 in Richtung des Pfeils 30 abwärts. Gleichzeitig schwenkt der zweite, bananenförmige Schwenklenker 23 um seine am Ausleger 24 gelegene Achse 27 gegensinnig in Richtung des Pfeils 31 abwärts. Die Verkleidung 10 wird dadurch nicht um eine feste Achse verschwenkt, sondern mit ihrem in Fahrtrichtung F vorderen Bereich abgesenkt und gleichzeitig nach vorne verlagert. Anders als bei einem reinen Verschwenken wird durch die Verlagerung an einem Mehrgelenk die vordere Kante der Verkleidung 10 nicht so weit nach vorne verlagert, daß eine Ausnehmung in der Vorderwand 14 erforderlich wäre.

Dadurch, daß der Ausleger 14 mit der Schwenkachse 27 weit unten gelegen ist und sich der eingewölbte Schwenklenker 23 bei Öffnung der Verkleidung 10 daran anlegt, kann die Dachspitze 5 in Fahrtrichtung weit nach vorne bis in einen Raum ragen, der von der Verkleidung 10 überdeckbar ist und nur wenige Zentimeter vor der Vorderwand 14 gelegen ist, ohne mit der Schwenkachse 27 oder anderen Teilen zu kollidieren. Durch die Einwölbung des Hebels 23 beläßt dieser auch beim Rückschwenken entgegen der Richtung des Pfeils 31 zum Schließen der Verkleidung 10 genügend Freiraum für die Dachspitze 5. Bei diesem Rückschwenken kann auch das eventuelle Halteteil 29 in sichernden Eingriff mit der Dachspitze 5 gelangen.

## Patentansprüche

1. Cabriolet-Fahrzeug (1) mit einem im hinteren Fahrzeugbereich in der Karosserie (7) unterhalb einer Durchtrittsebene (6) ablegbaren Dach (2), wobei ein Teil der Durchtrittsebene (6) bei geöffnetem Dach (2) von einer durch zumindest einen Antrieb (12) beweglichen, bei geschlossenem Dach (2) in Fahrtrichtung (F) vor dem hinteren Dachende und im Nahbereich hinter dem Insassenraum (9) gelegenen Verkleidung (10) abdeckbar ist,
**dadurch gekennzeichnet,**
**daß** die Verkleidung (10) mitsamt ihrem oder ihren Antrieb(en) (12) und einer vermittelnden Bewegungsmechanik (13) als modulare Einheit (11) ausgebildet und vormontiert in einen Karosserierohbau einsetzbar ist.

2. Cabriolet-Fahrzeug (1) nach Anspruch 1,
**dadurch gekennzeichnet,**
**daß** die modulare Einheit (11) als Funktionseinheit vormontierbar und vor ihrem Einbau in den Karosserierohbau die Verkleidung (10) testweise bewegbar ist.

3. Cabriolet-Fahrzeug (1) nach einem der Ansprüche 1 oder 2,
**dadurch gekennzeichnet,**
**daß** die Verkleidung (10) austauschbar an der vermittelnden Bewegungsmechanik (13) gehalten ist.

4. Cabriolet-Fahrzeug (1) nach Anspruch 3,
**dadurch gekennzeichnet,**
**daß** ein Sortiment von Verkleidungen (10) unterschiedlicher Umrißgestalten zum Einsatz in unterschiedlichen Fahrzeugen über die gleiche Bewegungsmechanik (13) bewegbar ist.

5. Cabriolet-Fahrzeug (1) nach Anspruch 4,
**dadurch gekennzeichnet,**
**daß** die Verkleidung (10) über ihre gesamte Breite als einstückiges Plattenteil ausgebildet ist.

6. Cabriolet-Fahrzeug (1) nach einem der Ansprüche 1 bis 5,
**dadurch gekennzeichnet,**
**daß** der Antrieb (12) von einem Elektromotor gebildet ist, der während der Dachbewegung unbewegt ist.

7. Cabriolet-Fahrzeug (1) nach einem der Ansprüche 1 bis 6,
**dadurch gekennzeichnet,**
**daß** der Antrieb (12) über einen Zentralstekker mit einem steuernden Anschluß an der Karosserie (7) verbindbar ist.

8. Cabriolet-Fahrzeug (1) nach einem der Ansprüche 1 bis 7,
**dadurch gekennzeichnet,**
**daß** die Verkleidung (10) zwischen einer im wesentlichen horizontalen Schließstellung bei geöffnetem Dach (2) und einer im wesentlichen vertikalen Offenstellung bei geschlossenem Dach (2) beweglich ist.

9. Cabriolet-Fahrzeug (1) nach Anspruch 8,
**dadurch gekennzeichnet,**
**daß** die Verkleidung (10) manuell in die im wesentlichen vertikale Offenstellung bewegbar ist.

10. Cabriolet-Fahrzeug (1) nach einem der Ansprüche 1 bis 9,
**dadurch gekennzeichnet,**
**daß** die Verkleidung (10) mit Hilfe von zumindest einem bananenförmig eingewölbten Schwenklenker (23) beweglich ist, in dessen Einwölbung bei in Schließstellung liegender Verkleidung (10) und geöffnetem Dach (2) das bei geschlossenem Dach (2) einem Windschutzscheibenrahmen (4) zugewandte vordere Dachende (5) ragt.

11. Cabriolet-Fahrzeug (1) nach Anspruch 10,
**dadurch gekennzeichnet,**
**daß** zur Zusammenwirkung mit dem vorderen Dachende (5) der Einwölbung des Schwenklenkers (23) ein Halteteil zugeordnet ist.

12. Cabriolet-Fahrzeug (1) nach einem der Ansprüche 1 bis 11,
**dadurch gekennzeichnet,**
**daß** die modulare Einheit (11) mit einer den Insassenraum (9) begrenzenden Rückwand (15) verschraubbar ist.

13. Modul (11) mit einer beweglichen Verkleidung für ein Cabriolet-Fahrzeug nach einem der Ansprüche 1 bis 12.
